# EUROPEAN PATENT APPLICATION

(11) **EP 4 439 818 A1**
(43) Date of publication of application: **02.10.2024**
(21) Application number: 23199648.9
(22) Date of filing: 26.09.2023
(51) Int. Cl.: H01M 50/204, H01M 50/507

(54) **CCS ASSEMBLIES AND BATTERY MODULES**

(30) Priority: 27.03.2023 CN 202320638230 U
(71) Applicant: Eve Energy Co., Ltd., Huizhou, Guangdong 516006 (CN)
(72) Inventor: YANG, Shuai, Huizhou, Guangdong 516006, 516006 (CN)
(74) Representative: Herrero & Asociados, S.L.

(57) **Abstract**

The present disclosure discloses a cells contact system (CCS) assembly and a battery module. The CCS assembly includes a support body (1), an output electrode base (2), and a connection assembly. The support body (1) and the output electrode base (2) are insulating members. The support body (1) is configured to support a busbar (4). The output electrode base (2) is mounted to the support body (1) through the connection assembly. The output electrode base (2) is configured to be connected to an output electrode piece (41) of the busbar (4).

## Description

### TECHNICAL FIELD

The present disclosure relates to the field of energy storage devices, and in particular, cells contact system (CCS) assemblies and battery modules.

### BACKGROUND

Output electrode bases and plastic supports of cells contact systems (CCS) assemblies of large cylindrical power batteries are integrally formed by injection molding. This design solution has the following disadvantages.
1. The integrated injection molding causes a material of an output electrode base to be limited by a material of a plastic support.
2. A high-temperature resistant material for the output electrode base of a large module leads to high filling pressure and difficult injection molding of the plastic support.
3. The large module is injection-molded from a material having a lower Vicat softening temperature and a thermal deformation temperature. Under a harsh operating condition, a temperature rise of the output electrode piece is excessively high, which softens or melts the output electrode base.
4. The integrated molding of the output electrode base and the plastic support requires a larger mold and a high cost.

### SUMMARY

Objectives of the present disclosure is to provide a cells contact system (CCS) assembly, which may improve a molding quality of an output electrode base and a plastic support and reduce processing difficulty.

Another objective of embodiments of the present disclosure is to provide a battery module with good quality and low processing cost.

In order to realize the above objectives, the present disclosure adopts the following technical solutions.

According to a first aspect, the present disclosure provides a cells contact system (CCS) assembly, which includes a support body, an output electrode base, and a connection assembly. The support body and the output electrode base are insulating members. The support body is configured to support a busbar. The output electrode base is mounted to the support body through the connection assembly. The output electrode base is configured to be connected to an output electrode piece of the busbar.

In a preferred solution of the CCS assembly, the output electrode base is detachably connected to the support body through the connection assembly.

In a preferred solution of the CCS assembly, the connection assembly includes a snap and a groove. One of the snap and the groove is arranged on the support body, the other of the snap and the groove is arranged on the output electrode base, and the snap is engaged in the groove.

In a preferred solution of the CCS assembly, the snap is inserted into the groove in a first direction. The connection assembly further includes a guide groove and a guide bump. One of the output electrode base and the support body is provided with the guide groove, the other of the output electrode base and the support body is provided with the guide bump, the guide bump is slidably arranged along the guide groove, and a length of the guide groove extends in the first direction.

In a preferred solution of the CCS assembly, the output electrode base includes a base body and a mounting plate. The mounting plate has a first side surface and a second side surface connected to the first side surface to form an angle. The first side surface is away from the base body, the second side surface is connected to the base body, and the first side surface is provided with the guide groove and the groove in a recessed manner.

In a preferred solution of the CCS assembly, the mounting plate has a third side surface parallel to the second side surface, and the guide groove extends through the second side surface and the third side surface; the guide bump includes a bump body, one side of the bump body is connected to the support body, and another side of the bump body is provided with a limiting plate, the bump body is slidably arranged in the guide groove, the limiting plate abuts against the second side surface, and the support body abuts against the third side surface.

In a preferred solution of the CCS assembly, when the snap is engaged in the groove, the guide bump abuts against a groove wall of an end of the guide groove.

In a preferred solution of the CCS assembly, the groove includes a first groove and a second groove connected to the first groove to form an angle, the first side surface is provided with the first groove in a recessed manner, the second groove is arranged on a groove wall of the first groove and extends through the second side surface, an engagement position of the snap is engaged in the second groove, and the snap abuts against a groove wall of the second groove.

In a preferred solution of the CCS assembly, the output electrode base further includes a reinforcing plate, and the reinforcing plate is connected to the base body and the second side surface.

According to a second aspect, the present disclosure provides a battery module, which includes a cell and the CCS assembly. The CCS assembly comprises: a support body, an output electrode base, and a connection assembly, wherein the support body and the output electrode base are insulating members, the support body is configured to support a busbar, the output electrode base is mounted to the support body through the connection assembly, and the output electrode base is configured to be connected to an output electrode piece of the busbar. The cell is electrically connected to a busbar of the CCS assembly.

Beneficial effects of the present disclosure are as follows. The support body and the output electrode base are two independent components, and thus may be processed separately. Corresponding materials may be respectively selected to form the support body and output electrode base as required, so that problems such as softening and melting of the support body and the output electrode base during use are avoided, and a manufacturing difficulty can be reduced. The connection assembly may mount and connect the support body and the output electrode base to implement functions of the CCS assembly.

### BRIEF DESCRIPTION OF THE DRAWINGS

The present disclosure is further described below with reference to the accompanying drawings and embodiments.
FIG. 1 is a schematic diagram of a cells contact system (CCS) assembly according to some embodiments of the present disclosure from a perspective.
FIG. 2 is a schematic diagram of the CCS assembly according to some embodiments of the present disclosure from another perspective.
FIG. 3 is a schematic diagram of an output electrode base and part of a support body according to some embodiments of the present disclosure.
FIG. 4 is an exploded schematic diagram of the output electrode base and part of the support body according to some embodiments of the present disclosure.
FIG. 5 is a schematic diagram of the output electrode base according to some embodiments of the present disclosure.
FIG. 6 is a schematic diagram of the output electrode base, a busbar, and part of the support body according to some embodiments of the present disclosure.
FIG. 7 is an exploded diagram of another output electrode base and part of another support body according to some other embodiments of the present disclosure.

### List of reference signs:

1, support body; 11, snap; 12, guide bump; 121, bump body; 122, limiting plate; 13, machining hole; 2, output electrode base; 21, base body; 22, mounting plate; 221, first side surface; 222, second side surface; 223 third side surface; 224, guide groove; 225, groove; 2251, first groove; 2252, second groove; 23, reinforcing plate; 24, insert nut; 3, output electrode protective cover; 4, series busbar; 41, output electrode piece.

### DETAILED DESCRIPTION

Some embodiments of the present disclosure will be described in detail below in connection with the accompanying drawings. The embodiments are described for illustrative purposes only and are not intended to limit the present disclosure.

The terminology used herein is for the purpose of describing particular example embodiments only and is not intended to be limiting. As used herein, the singular forms "a," "an," and "the" may be intended to include the plural forms as well, unless the context clearly indicates otherwise.

In the description of the present disclosure, it should be noted that unless otherwise explicitly specified and limited terms "connect" and "fix" should be understood in a broad sense. For example, a connection may be a fixed connection, a detachable connection, or an integral connection; may be a mechanical connection or an electrical connection; or may be a direct connection, an indirect connection through an intermediate medium, internal communication between two elements, or an interaction relationship between two elements. A person of ordinary skill in the art can understand specific meanings of the terms in the present present disclosure according to specific situations.

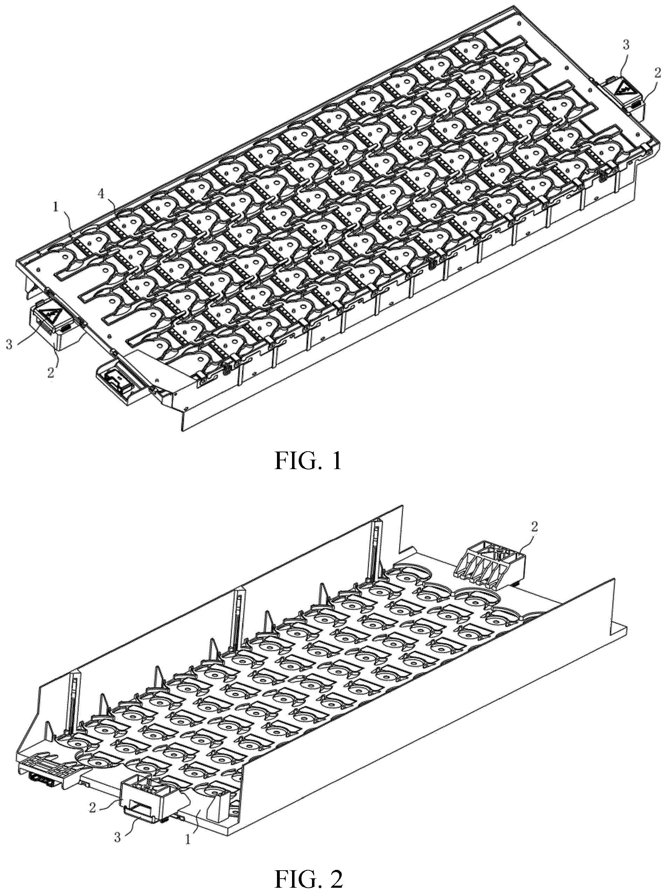

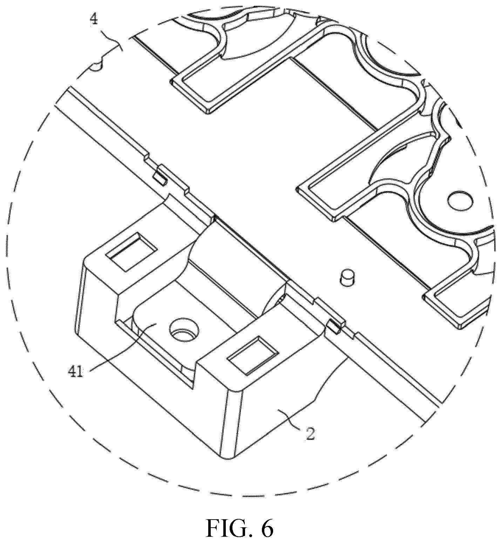

As shown in FIG. 1 to FIG. 3 and FIG. 6, a cells contact system (CCS) assembly provided by the present disclosure includes a support body 1, an output electrode base 2, and a connection assembly. The support body 1 and the output electrode base 2 are insulating members. The support body 1 is configured to support a busbar 4. The output electrode base 2 is configured to be connected to an output electrode piece 41 of the busbar 4. The output electrode base 2 is further configured to be connected to an output electrode protective cover 3. The output electrode base 2 is mounted to the support body 1 through the connection assembly. In some embodiments, the support body 1 and the output electrode base 2 are two independent components, so that the support body 1 and the output electrode base 2 independent of each other may be processed separately. Corresponding materials may be respectively selected to form the support body 1 and output electrode base 2 as required, so that problems such as softening and melting of the support body 1 and the output electrode base 2 during use are avoided, and a manufacturing difficulty can be reduced. The connection assembly may mount and connect the support body 1 and the output electrode base 2 to implement functions of the CCS assembly.

In some embodiments, the CCS assembly is applied to a battery module. An insert nut 24 is arranged on the output electrode base 2. The insert nut 24 is fixed to the output electrode piece 41 of the busbar 4 by a bolt. The output electrode piece 41 of the busbar 4 aggregates and outputs current of six parallel branches of cells in the battery module. Therefore, a temperature rise in an area of the output electrode base 2 is relatively high, and a temperature resistance requirement of a material required by the output electrode base 2 is relatively high. Optionally, the output electrode base 2 is injection-molded from a polybutylene terephthalate (PBT) +30% glass fiber (GF) material having a thermal deformation temperature up to 200°C. In some embodiments, a size of the support body 1 is relatively large, and a temperature rise of the support body 1 is much smaller than that of the output electrode base 2. To reduce a filling pressure of the injection molding, the support body 1 is injection-molded from a polycarbonate (PC) + acrylonitrile butadiene styrene (ABS) material having a thermal deformation temperature up to 105°C.

In some embodiments, the output electrode base 2 is detachably connected to the support body 1 through the connection assembly. It may be understood that parts are worn during long-term use. A detachable connection between the output electrode base 2 and the support body 1 facilitate replacement of the parts and maintenance of the battery module.

In some alternative embodiments, the output electrode base 2 may also be fixedly connected to the support body 1. For example, the output electrode base 2 and the support body 1 may be fixed together by a hot riveting process. In this case, the connection assembly is a rivet and a hole structure matched with the rivet. An insulating material may be used to manufacture the rivet. Since the materials of the output electrode base 2 and the support body 1 are different, the output electrode base 2 and the support body 1 have different melting points and injection molding temperatures. In some alternative embodiments, the output electrode base 2 may be formed first, and a hole or groove structure may be reserved on the output electrode base 2, the output electrode base 2 is putted into a mold of the support body 1, and then a material is injected into the mold to form the support body 1. Since the material of the support body 1 has good fluidity, the injected material may enter the reserved the hole or groove structure on the output electrode base 2. After curing and cooling, the support body 1 and the output electrode base 2 are fixed. It may be understood that the melting point of the material of the output electrode base 2 is high, and the output electrode base 2 will not be melted during the injection molding of the support body 1. That is, in some embodiments, the connection assembly include the hole or groove structure provided on the output electrode base 2 and a part of the support body 1 that flows into the hole or groove structure when the support body 1 is injection-molded.

In some embodiments, the connection assembly includes a snap 11 and a groove 225. One of the snap 11 and the groove 225 is arranged on the support body 1, the other of the snap 11 and the groove 225 is arranged on the output electrode base 2. The snap 11 is engaged in the groove 225. The snap 11 and the groove 225 are arranged to fix the support body 1 and the output electrode base 2 in a snap-fit manner, which may facilitate the fixing and mounting of the support body 1 and the output electrode base 2. The snap 11 and the groove 225 are formed directly on the support body 1 and the output electrode base 2, which may reduce a number of parts and simplify mounting steps. In some alternative embodiments, the support body 1 and the output electrode base 2 may also be fixed by a screw. In this case, one of the output electrode base 2 and the support body 1 is provided with a guide groove, the other of the output electrode base 2 and the support body 1 is provided with a guide bump. The screw is screwed into a threaded hole through the through hole. The screw requires to be insulated. In some embodiments, the connection assembly includes the screw, the through hole, and the treaded hole. In some embodiments, the screw may be replaced with a bolt and a fixing nut.

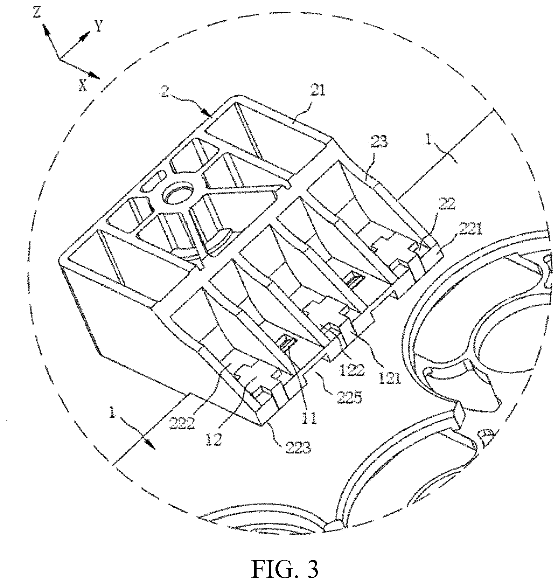

In some embodiments, the snap 11 is inserted into the groove 225 in a first direction. The connection assembly further includes a guide groove 224 and a guide bump 12. One of the output electrode base 2 and the support body 1 is provided with the guide groove 224, the other of the output electrode base 2 and the support body 1 is provided with the guide bump 12. The guide bump 12 is slidably arranged in the guide groove 224. That is to say, the guide bump 12 is slidably arranged along a lengthwise direction of the guide groove 224, and a length of the guide groove 224 extends in the first direction. The guide groove 224 may position the output electrode base 2 and the support body 1 for mounting, which further facilitates fixing and mounting thereof. Referring to FIG. 3, the first direction corresponds to an X direction in the figure, a second direction corresponds to a Y direction in the figure, and a third direction corresponds to a Z direction in the figure. In some embodiments, the guide groove 224 and the guide bump 12 may limit the output electrode base 2 in the second direction and the third direction.

Further, in some embodiments, the output electrode base 2 includes a base body 21 and a mounting plate 22. The mounting plate 22 has a first side surface 221 and a second side surface 222 connected to the first side surface to form an angle. The first side surface 221 is away from the base body 21, the second side surface 222 is connected to the base body 21, and the first side surface 221 is provided with the guide groove 224 and the groove 225 in a recessed manner. It may be understood that the mounting plate 22 is a plate structure, and the two groove structures of the guide groove 224 and the groove 225 are both arranged on the mounting plate 22, which can reduce processing difficulty.

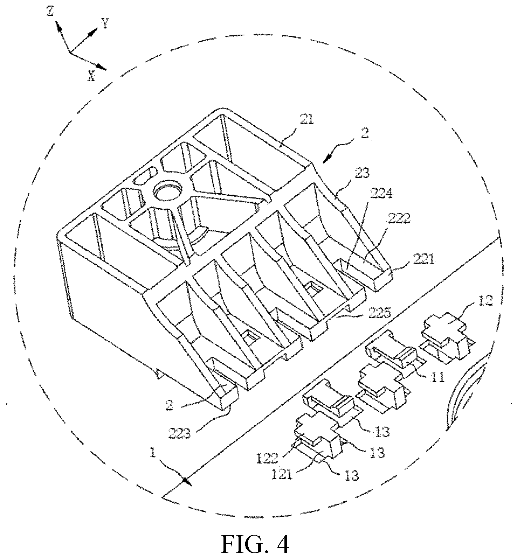

Referring to FIG. 3 and FIG. 4, optionally, the output electrode base 2 further includes a reinforcing plate 23. The reinforcing plate 23 is connected to the base body 21 and the second side surface 222. It may be understood that the mounting plate 22 is of a cantilever structure. The two groove structures of the guide groove 224 and the groove 225 arranged on the mounting plate 22 weaken strength of the mounting plate 22. The reinforcing plate 23 may improve a connecting strength between the mounting plate 22 and the base body 21, and may also improve s strength of the mounting plate 22. In some embodiments, the CCS assembly includes six reinforcing plates 23, three guide grooves 224, and two grooves 225. The guide grooves 224 and the grooves 225 are respectively arranged in five gaps formed by the six reinforcing plates 23. The grooves 225 are located between two adjacent guide grooves 224.

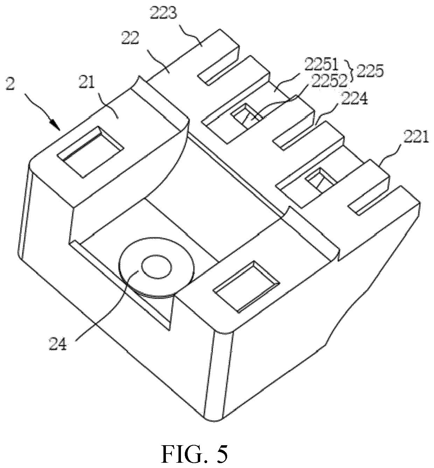

Referring to FIG. 3 to FIG. 5, in some embodiments, the mounting plate 22 has a third side surface 223 parallel to the second side surface 222. The guide groove 224 extends through the second side surface 222 and the third side surface 223. The guide bump 12 includes a bump body 121. One side of the bump body 121 is connected to the support body 1, and another side of the bump body 121 is provided with a limiting plate 122. The bump body 121 is slidably arranged in the guide groove 224, the limiting plate 122 abuts against the second side surface 222, and the support body 1 abuts against the third side surface 223. By arranging the guide groove 224 through the second side surface 222 and the third side surface 223, the guide groove 224 is equivalent to a notch structure arranged on the mounting plate 22, which may reduce processing difficulty of the guide groove 224. In some embodiments, the output electrode base 2 is injection-molded, and the notch-shaped guide groove 224 may reduce design difficulty of the mold and reduce the cost. Since the guide groove 224 extends through the second side surface 222 of the mounting plate 22, the output electrode base 2 lacks a limit in the Z direction. Therefore, the limiting plate 122 may enable the mounting plate 22 to be clamped between the support body 1 and the limiting plate 122 to ensure connection stability between the output electrode base 2 and the support body 1.

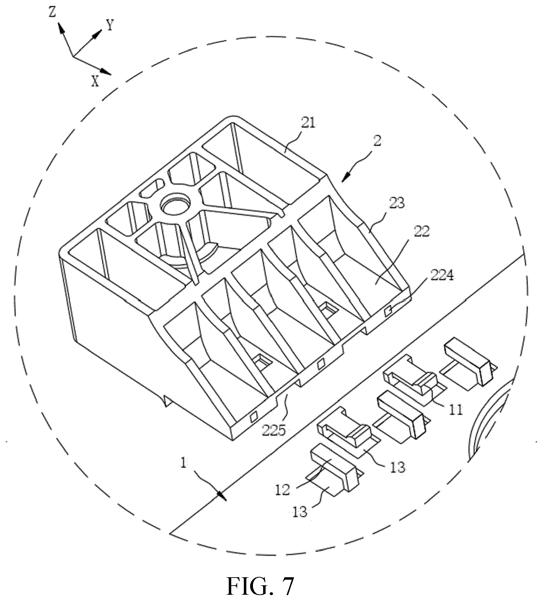

Referring to FIG. 7, in some alternative embodiments, the guide groove 224 may not extend through the second side surface 222 and the third side surface 223. In this case, the guide bump 12 may be of an L-shaped structure. An end of the guide bump 12 is connected with the support body 1 in the third direction, and the other end of the guide bump 12 is inserted into the guide groove 224 in the first direction.

Referring to FIG. 3 and FIG. 4, when the snap 11 is engaged in the groove 225, the guide bump 12 abuts against a groove wall of an end of the guide groove 224, which may also limit movement of the output electrode base 2 in the first direction, thereby further improving stability of fixing of the output electrode base 2.

Further, the groove 225 includes a first groove 2251 and a second groove 2252 connected to the first groove 2251 to from an angle. The first side surface 221 is provided with the first groove 2251 in a recessed manner. The second groove 2252 is arranged on a groove wall of the first groove 2251 and extends through the second side surface 222. An engagement position of the snap 11 is engaged in the second groove 2252, and the snap 11 abuts against a groove wall of the second groove 2252. By arranging the second groove 2252 extending through the second side surface 222, the processing difficulty of the output electrode base 2 may be reduced, thereby reducing the processing cost. The guide groove 224 extends through the second side surface 222 and the third side surface 223. Therefore, by setting the second groove 2252 extending through the second side surface 222, an opening direction on the mounting plate 22 may be consistent, which may also reduce difficulty of the mold design and reduce the production cost.

In some embodiments, a machining hole 13 corresponding to each of the snap 11 and the guide bump 12 is arranged on the support body 1. Since the support body 1 is injection-molded, the machining hole 13 may reduce a number of sliders in the mold, thereby reducing the difficulty of the mold design and reducing the cost.

Some embodiments further provide a battery module, which includes a cell and the CCS assembly as described in any one of the above embodiments. The cell is electrically connected to the busbar 4 of the CCS assembly. The support body 1 and the output electrode base 2 of the CCS assembly in the above embodiments have good molding quality and low processing difficulty. Therefore, the battery module including the CCS assembly has good quality and low processing cost.

In the description of the present disclosure, it should be understood that orientation or position relationships indicated by the terms such as "on", "below", "top", "left", and "right" are based on orientation or position relationships shown in the accompanying drawings, and are used only for ease and brevity of illustration and description of the operation, rather than indicating or implying that the mentioned apparatus or component need to have a particular orientation or need to be constructed and operated in a particular orientation. Therefore, such terms should not be construed as limiting of the present disclosure. In addition, terms "first" and "second" are only used for distinguishing between descriptions and have no special meaning.

In the description of this specification, description such as "an embodiment" or "an example", means specific features, structures, materials, or features described in the embodiment or example are included in at least one embodiment or example of the present disclosure. In this specification, exemplary descriptions of the foregoing terms do not necessarily refer to the same embodiment or example.

In addition, it should be understood that although this specification is described according to each implementation, each implementation may not include only one independent technical solution. The description manner of this specification is merely for clarity. This specification should be considered as a whole by a person skilled in the art, and the technical solution in each embodiment may also be properly combined, to form other implementations that can be understood by the person skilled in the art.

The technical principle of the present disclosure has been described above in conjunction with specific embodiments. These descriptions are only for explaining the principle of the present disclosure, and cannot be construed in any way as limiting the protection scope of the present disclosure. Based on the explanation herein, a person skilled in the art can associate other specific embodiments of the present disclosure without creative effort, and these manners all fall within the protection scope of the present disclosure.

## Claims

1. A cells contact system (CCS) assembly, comprising a support body (1), an output electrode base (2), and a connection assembly, wherein the support body (1) and the output electrode base (2) are insulating members, the support body (1) is configured to support a busbar (4), the output electrode base (2) is mounted to the support body (1) through the connection assembly, and the output electrode base (2) is configured to be connected to an output electrode piece (41) of the busbar (4).

2. The CCS assembly as claimed in claim 1, wherein the output electrode base (2) is detachably connected to the support body (1) through the connection assembly.

3. The CCS assembly as claimed in claim 1 or 2, wherein the connection assembly comprises a snap (11) and a groove (225), one of the snap (11) and the groove (225) is arranged on the support body (1), the other of the snap (11) and the groove (225) is arranged on the output electrode base (2), and the snap (11) is engaged in the groove (225).

4. The CCS assembly as claimed in claim 3, wherein the snap (11) is inserted into the groove (225) in a first direction, the connection assembly further comprises a guide groove (224) and a guide bump (12), one of the output electrode base (2) and the support body (1) is provided with the guide groove (224), the other of the output electrode base (2) and the support body (1) is provided with the guide bump (12), the guide bump (12) is slidably arranged along the guide groove (224), and a length of the guide groove (224) extends in the first direction.

5. The CCS assembly as claimed in claim 4, wherein the output electrode base (2) comprises a base body (21) and a mounting plate (22), the mounting plate (22) has a first side surface (221) and a second side surface (222) connected to the first side surface (221) to form an angle, the first side surface (221) is away from the base body (21), the second side surface (222) is connected to the base body (21), and the first side surface (221) is provided with the guide groove (224) and the groove (225) in a recessed manner.

6. The CCS assembly as claimed in claim 5, wherein the mounting plate (22) has a third side surface (223) parallel to the second side surface (222), and the guide groove (224) extends through the second side surface (222) and the third side surface (223);
the guide bump (12) comprises a bump body (121), one side of the bump body (121) is connected to the support body (1), and another side of the bump body (121) is provided with a limiting plate (122), the bump body (121) is slidably arranged in the guide groove (224), the limiting plate (122) abuts against the second side surface (222), and the support body (1) abuts against the third side surface (223).

7. The CCS assembly as claimed in claim 5, wherein the guide bump (12) is of an L-shaped structure, an end of the guide bump (12) is connected with the support body (1), and another end of the guide bump (12) is inserted into the guide groove (224) in the first direction.

8. The CCS assembly as claimed in claim 5, wherein when the snap (11) is engaged in the groove (225), the guide bump (12) abuts against a groove wall of an end of the guide groove (224).

9. The CCS assembly as claimed in claim 5, wherein the groove (225) comprises a first groove (2251) and a second groove (2252) connected to the first groove (2251) to from an angle, the first side surface (221) is provided with the first groove (2251) in a recessed manner, the second groove (2252) is arranged on a groove wall of the first groove (2251) and extends through the second side surface (222), an engagement position of the snap (11) is engaged in the second groove (2252), and the snap (11) abuts against a groove wall of the second groove (2252).

10. The CCS assembly as claimed in claim 5, wherein the output electrode base (2) further comprises a reinforcing plate (23), and the reinforcing plate (23) is connected to the base body (21) and the second side surface (222).

11. A battery module, comprising a cells contact system (CCS) assembly and a cell, wherein the CCS assembly comprises: a support body (1), an output electrode base (2), and a connection assembly, wherein the support body (1) and the output electrode base (2) are insulating members, the support body (1) is configured to support a busbar (4), the output electrode base (2) is mounted to the support body (1) through the connection assembly, and the output electrode base (2) is configured to be connected to an output electrode piece (41) of the busbar (4);
wherein the cell is electrically connected to the busbar (4) of the CCS assembly.

12. The battery module as claimed in claim 11, wherein the output electrode base (2) is detachably connected to the support body (1) through the connection assembly.

13. The battery module as claimed in claim 11, wherein the connection assembly comprises a snap (11) and a groove (225), one of the snap (11) and the groove (225) is arranged on the support body (1), the other of the snap (11) and the groove (225) is arranged on the output electrode base (2), and the snap (11) is engaged in the groove (225).

14. The battery module as claimed in claim 13, wherein the snap (11)is inserted into the groove (225) in a first direction, the connection assembly further comprises a guide groove (224) and a guide bump (12), one of the output electrode base (2) and the support body (1) is provided with the guide groove (224), the other of the output electrode base (2) and the support body (1) is provided with the guide bump (12), the guide bump (12) is slidably arranged along the guide groove (224), and a length of the guide groove (224) extends in the first direction.

15. The battery module as claimed in claim 14, wherein the output electrode base (2) comprises a base body (21) and a mounting plate (22), the mounting plate (22) has a first side surface (221) and a second side surface (222) connected to the first side surface (221) to form an angle, the first side surface (221) is away from the base body (21), the second side surface (222) is connected to the base body (21), and the first side surface (221) is provided with the guide groove (224) and the groove (225) in a recessed manner.
